Europäisches Patentamt

European Patent Office

Office européen des brevets

(11) Veröffentlichungsnummer: **0 338 548**
**A2**

## (12) EUROPÄISCHE PATENTANMELDUNG

(21) Anmeldenummer: 89107090.6

(22) Anmeldetag: 20.04.89

(51) Int. Cl.⁴: **C04B 40/00 , B28C 5/00**

(30) Priorität: 21.04.88 DE 3813341

(43) Veröffentlichungstag der Anmeldung:
25.10.89 Patentblatt 89/43

(84) Benannte Vertragsstaaten:
**AT BE CH DE ES FR GB IT LI NL SE**

(71) Anmelder: **MASCHINENFABRIK GUSTAV EIRICH**
**Walldürner Strasse 50**
**D-6969 Hardheim(DE)**

(72) Erfinder: **Ries, Hans B.**
**Odenwaldweg 6**
**D-6969 Hardheim(DE)**

(74) Vertreter: **Weber, Dieter, Dr. et al**
**Dr. Dieter Weber und Dipl.-Phys. Klaus**
**Seiffert Patentanwälte**
**Gustav-Freytag-Strasse 25 Postfach 6145**
**D-6200 Wiesbaden 1(DE)**

(54) Verfahren zum Befeuchten einer zement- oder gipsgebundenen faserhaltigen Baustoffmischung.

(57) Ein einfaches und billiges Verfahren zum Befeuchten einer zement- oder gipsgebundenen faserhaltigen Baustoffmischung mit Hilfe von Wasser ist dadurch gekennzeichnet, daß man das Wasser der Baustoffmischung wenigstens teilweise in Form eines wenigstens ein Tensid und wenigstens einen Schaumstabilisator enthaltenden Schaumes zugibt oder in Berührung mit der Baustoffmischung, eines Tensids und wenigstens eines Schaumstabilisators wenigstens teilweise in Schaum überführt und daß man das Wasser der Baufstoffmischung in solcher Menge zugibt, daß die Baustoffmischung im befeuchteten Zustand pulverigkrümelig ist.

EP 0 338 548 A2

## Verfahren zum Befeuchten einer zement-oder gipsgebundenen faserhaltigen Baustoffmischung

Verschiedene zement- oder gipsgebundene faserhaltige Baustoffmischungen müssen in einem Mischer mit Wasser befeuchtet werden, was jedoch häufig zu einer Knötchenbildung führen kann, da die hydraulischen Bindemittel Zement und Gips hohe Affinität zu Wasser haben. Eine solche Knötchenbildung, die insbesondere bei Baustoffmischungen auftritt, die neben dem hydraulischen Bindemittel organische oder anorganische Fasern, wie Papierfasern, enthalten, stört die Weiterverarbeitung des Baustoffgemisches und beeinträchtigt die Qualität des Endproduktes. Wird lediglich die Faser mit Wasser vorbefeuchtet, so kann es durch einen Verdichtungs- und Verfilzungseffekt ebenfalls zu Knötchenbildung kommen.

Um eine solche Knötchenbildung zu vermeiden, ist es bekannt, das Wasser durch Düsen in sehr fein verteilter Form als Nebel in einen schnellaufenden Mischer einzudüsen. Ein solches Verfahren ist sehr aufwendig und birgt die Gefahr einer Verschmutzung des Mischers durch die sich bildenden fluidisierten feuchten Staubteilchen in sich.

Eine andere bekannte Methode zur Vermeidung der genannten Knötchenbildung besteht darin, das Wasser der Baustoffmischung in Form von Schnee zuzugeben. Auch dieses Verfahren ist aufwendig und kostenintensiv, da es einer zusätzlichen Anlage zur Erzeugung von Schnee bedarf.

Die der Erfindung zugrundeliegende Aufgabe bestand somit darin, die Nachteile der bekannten Befeuchtungsverfahren zu vermeiden und ein einfacher und billiger arbeitendes Verfahren zum Befeuchten von Baustoffmischungen, insbesondere von Mischungen aus Fasern und Wasser, gegebenenfalls mit Gips- oder Zementzusatz, wie Zement-Papierfaser-Gemischen, zu bekommen.

Das erfindungsgemäße Verfahren zum Befeuchten einer zement-oder gipsgebundenen Baustoffmischung mit Hife von Wasser ist dadurch gekennzeichnet, daß man das Wasser der Baustoffmischung wenigstens teilweise in Form eines wenigstens ein Tensid und wenigstens einen Schaumstabilisator enthaltenden Schaumes zugibt oder in Berührung mit der Baustoffmischung, eines Tensids und wenigstens eines Schaumstabilisators wenigstens teilweise in Schaum überführt und daß man das Wasser der Baustoffmischung in solcher Menge zugibt, daß die Baustoffmischung im befeuchteten Zustand pulverig-krümelig ist.

Bei diesem Verfahren wird eine örtliche Überfeuchtung der Mischung, die die Ursache für die Knötchenbildung ist, wirksam vermieden.

Das Wasser wird also der Baustoffmischung nur in solcher Menge zugegeben, daß das befeuchtete Endprodukt keine flüssige oder gießfähige Konsistenz hat, sondern pulverig-krümelig bleibt und in dieser Form zu Formlingen preßbar ist. Die jeweils für dieses Endergebnis erforderliche Wassermenge ist verschieden und hängt von der Baustoffmischung ab, da diese unterschiedliche Wassermengen aufnehmen kann. Beim Vermischen der Baustoffmischung mit dem Schaum wird der Schaum weitgehend zerstört.

Es gibt Verfahren, bei denen die Fasern angefeuchtet werden und das Bindemittel in der Formanlage eingearbeitet wird. Es kann auch Fälle geben, bei denen unter Anwendung eines Vakuum-Mischers die Dichte und der Porengehalt der Mischung geregelt werden können.

Das Wasser braucht nicht vollständig in Schaumform zugeführt zu werden oder im Mischer in die Schaumform überführt zu werden.

Zweckmäßig wird der Schaum separat, ohne Berührung mit der Baustoffmischung hergestellt und erst dann mit der Baustoff mischung vermischt. Günstigerweise wird er allein oder zusammen mit Wasser über Hochdruckdüsen eingespritzt. Auch das für die Reinigung des Mischers erforderliche Reinigungswasser kann über solche Hochdruckdüsen eingedüst werden. Auch kann ein Teil des zum Anfeuchten erforderlichen Wassers als solches über Hochdruckdüsen eingespritzt werden, während der Rest in Schaumform mit einer hiervon separaten Einrichtung zugegeben wird.

Der zum Vermischen der Baustoffmischung mit dem Schaum verwendete Mischer kann im Vakuum wie im Überdruckbereich arbeiten. Im letzteren Fall soll durch den Überdruck Luftaustritt aus der Mischung verhindert werden.

Die Schaumerzeugung kann auf unterschiedliche, an sich bekannte Weise erfolgen, wie durch Einblasen eines Gases, insbesondere von Luft, in das die Tenside und Schaumstabilisatoren enthaltende Wasser oder durch heftiges Schlagen, Schütteln, Verspritzen oder Rühren des die Tenside und Schaumstabilisatoren enthaltenden Wassers in der betreffenden Gasatmosphäre. Zweckmäßig wird der Schaum kontinuierlich in einer an sich bekannten Schaumerzeugungsanlage hergestellt und in den Mischer, welcher die Baustoffmischung enthält, eingepumpt. Dies erleichtert die Zuführung, da die Entnahme und Überführung von chargenweise hergestelltem Schaum in den Mischer Probleme bereiten kann. Zweckmäßig geht man daher bei der Schaumerzeugung so vor, daß man zunächst die Tenside und Schaumstabilisatoren in dem Wasser löst und dieses sodann in einer geeigneten kontinuierlich arbeitenden Apparatur durch Einblasen von Luft schäumt und den so gebildeten Schaum unmittelbar in den Mischer, der die Baustoffmischung enthält, überführt. Für die Herstellung des Schaumes in einer separaten Einrichtung ist es zweckmäßig, bei der Schaumherstellung eine Temperatur von 15 bis 50, vorzugsweise von 20 bis 40°C einzuhalten. Bei mehrstufigen Mischvorgängen kann auch eine mehrstufige Schaumzugabe erfolgen.

Wenn der Schaum während des Mischens im Mischer erzeugt werden soll, kann hierin durch stationäre oder rotierende Lanzen Luft eingeblasen werden.

Zweckmäßig wird das Wasser der Baustoffmischung in einem bis zum Acht- bis Zwanzigfachen, vorzugsweise bis zum Zehn- bis Fünfzehnfachen seines Flüssigkeitsvolumens geschäumten Zustand zugegeben. Das Befeuchtungsverfahren nach der Erfindung kann chargenweise oder kontinuierlich durch mehrstufige Arbeitsweise in einem oder zwei Mischern durchgeführt werden. Die kontinuierliche Verfahrensweise ist bevorzugt.

Als Tenside oder Schaumbildner kommen übliche grenzflächenaktive Stoffe in Bertracht, wie sie für die Schaumbildung in Wasser bekannt sind.

Geeignete Aniontenside sind beispielsweise Seifen, Alkansulfonate, Olefinsulfonate, Estersulfonate, Alkylarylsulfonate und insbesondere Alkylbenzolsulfonate, wie Dodecylbenzolsulfonat, und Alkylnaphthalinsulfonate, Alkylsulfate, Ethersulfate und Fettalkohol(ether)sulfate.

Brauchbare Kationtenside sind beispielsweise geradkettige und zyklische Ammoniumverbindungen, Benzalkoniumchloride und quaternäre Ammoniumsalze, Aminsalze und Pyridiniumsalze.

Geeignete nichtionogene Tenside sind beispielsweise Polyether, insbesondere Alkylphenolpolyglykolether und andere Produkte der Ethoxylierung von Fettsäuren, Fettsäureamiden, Fettaminen und Fettalkoholen sowie Aminoxide und Fettsäureester von Polyalkoholen.

Brauchbare ampholytische Tenside, die als Zwitterionen anionaktive und kationaktive hydrophile Gruppen in sich vereinigen, sind beispielsweise Glycinderivate mit Betainstruktur sowie Sulfobetaine.

Auch die Schaumstabilisatoren sind als solche, wie bei spielsweise aus der Waschmittelherstellung, bekannt und sind Verbindungen, die waschaktiven Stoffen in kleinen Mengen beigemischt werden, um ein zu raschen Zusammensinken des Schaumes zu verhindern. Im allgemeinen handelt es sich dabei um viskositätserhöhende Verbindungen. Beispiele hierfür sind Fettsäurealkanolamide und Celluloseether, wie Methyl-, Ethyl- oder Carboxymethylcellulose, doch können auch beliebige andere bekannte Schaumstabilisatoren, wie Alginate, Polyvinylalkohol, Dextrin oder Gelatine, verwendet werden, die geeignet sind, die Schaumstabilität wäßriger Lösungen ausreichend lange aufrechtzuerhalten, wie für das Vermischen mit den Baustoffmischungen erforderlich ist. Zweckmäßig verwendete Schaumstoffstabilisatoren sind insbesondere Celluloseether.

Das erfindungsgemäße Verfahren bietet Vorteile bei beliebi-gen zement- oder gipsgebundenen Baustoffmischungen, besonders aber bei Baustoffmischungen, die neben dem hydraulischen Bindemittel Zement oder Gips, insbesondere Gips, Faserstoffe organischen oder anorganischen Ursprungs enthalten, da solche Mischungen besonders zur Knötchenbildung neigen. Die Fasern solcher Baustoffmischungen können Mineralfasern, wie Steinfasern oder Glasfasern, oder Fasern organischen Ursprungs, wie kunststoffasern oder Cellulosefasern sein. Besonders eignet sich das erfindungsgemäße Verfahren bei der Anwen-.dung zur Befeuchtung von Gips-Papierfaser-Gemischen.

Beispiele

1.) Verfahrensablauf für das Chargenmischen

| Rezeptur: | |
|---|---|
| 100 kg | Gips |
| 20 kg | Papier-Faser |
| 36 kg | Schaum ≙ etwa 300 - 400 l |

erzeugt durch Zugabe von 1 % Tensid und 0,5 % Carboxymethylcellulose

EP 0 338 548 A2

| Der Verschäumungsfaktor beträgt etwa 9 - 11 | |
|---|---|
| Mischerbeschickung Faser | 20 sec |
| Mischerbeschickung Gips | 10 sec |
| Trockenmischen | 30 - 60 sec |
| Schaumzugabe | 120 sec |
| Fertigmischen | 60 sec |
| Entleeren | 30 sec |
| Gesamtzeit | 270 - 300 sec |

2.) Kontinuierlicher Mischprozeß

Kontinuierliche Faser und Bindemitteldosierung in einem Kontimischer
Die Schaumzugabe erfolgt im zweiten Teil des Durchlaufmischers oder in einem nachgeschalteten zweiten Durchlaufmischer.

3.) Getrennte Faserbefeuchtung mit Schaum in einem Chargen-oder Durchlaufmischer

| Rezeptur: | | |
|---|---|---|
| Gips | 60 kg | |
| Papierfaser | 12 kg | |
| Schaum | 24 kg ≙ 200 - 260 l | |
| Chargenprozeß: Mischerbeschickung Faser | | 20 sec |
| Auflockern der Faser | | 20 sec |
| Schaumzugabe | | 120 sec |
| Entleeren | | 30 sec |
| Gesamtzeit | | 190 sec |

Das Bindemittel wird in der Formanlage eingearbeitet.

4.) Kontinuierliches Verfahren

Kontinuierliche Faserzugabe in einem Durchlaufmischer mit kontinuierlicher Schaumzugabe vorzugsweise über die gesamte Länge des Mischers.

**Ansprüche**

1. Verfahren zum Befeuchten einer zement- oder gipsgebundenen faserhaltigen Baustoffmischung mit Hilfe von Wasser, **dadurch gekennzeichnet,** daß man das Wasser der Baustoffmischung wenigstens teilweise in Form eines wenigstens ein Tensid und wenigstens einen Schaumstabilisator enthaltenden Schaumes zugibt oder in Berührung mit der Baustoffmischung, eines Tensids und wenigstens eines Schaumstabilisators wenigstens teilweise in Schaum überführt und daß man das Wasser der Baustoffmischung in solcher Menge zugibt, daß die Baustoffmischung im befeuchteten Zustand pulverig-krümelig ist.

4

2. Verfahren nach Anspruch 1, **dadurch gekennzeichnet,** daß man zunächst das oder die Tenside und den oder die Schaumstabilisatoren im Wasser löst und dieses sodann durch Einblasen von Luft schäumt.

3. Verfahren nach Anspruch 1 oder 2, **dadurch gekennzeichnet,** daß man das Wasser bis zum Acht- bis Zwanzigfachen, vorzugsweise bis zum Zehn- bis Fünfzehnfachen seines Flüssigkeitsvolumens geschäumt zugibt.

4. Verfahren nach einem der Ansprüche 1 bis 3, **dadurch gekennzeichnet,** daß man als Schaumstabilisator wenigstens einen Celluloseether, ein Alginat, einen Polyvinylalkohol, ein Dextrin oder Gelatine verwendet.

5. Verfahren nach einem der Ansprüche 1 bis 4, **dadurch gekennzeichnet,** daß man Schaum einer Temperatur von 15 bis 50, vorzugsweise 20 bis 40 ° C verwendet.

6. Verfahren nach einem der Ansprüche 1 bis 5, **dadurch gekennzeichnet,** daß man den Schaum und gegebenenfalls Wasser durch Hochdruckdüsen in den die Baustoffmischung enthaltenden Mischer einbläst.

7. Anwendung des Verfahrens nach einem der Ansprüche 1 bis 6 zum Befeuchten von Zement-Papierfaser-Gemischen.